# EUROPÄISCHE PATENTSCHRIFT

(11) **EP 2 035 254 B1**
(45) Veröffentlichungstag und Bekanntmachung des Hinweises auf die Patenterteilung: **23.03.2011**
(21) Anmeldenummer: 07764827.7
(22) Anmeldetag: 25.06.2007
(51) Int. Cl.: B60N 2/427

(54) **FAHRZEUGSITZ MIT EINEM SITZTEIL UND MIT EINER RÜCKHALTEVORRICHTUNG ZUR VERHINDERUNG DES DURCHRUTSCHENS EINES PASSAGIERS, RÜCKHALTVORRICHTUNG UND HERSTELLUNGSVERFAHREN**
VEHICLE SEAT COMPRISING A SEAT PART AND AN ANTI-SUBMARINING RESTRAINT DEVICE, RESTRAINT DEVICE AND METHOD OF MANUFACTURE
SIEGE DE VEHICULE PRESENTANT UNE PARTIE ASSISE ET UN DISPOSITIF DE RETENUE DESTINE A EMPECHER LE GLISSEMENT D'UN OCCUPANT, DISPOSITIF DE RETENUE ET PROCEDE DE FABRICATION

(30) Priorität: 23.06.2006 DE 102006029299
(43) Veröffentlichungstag der Anmeldung: 18.03.2009
(73) Patentinhaber: Johnson Controls GmbH, 51399 Burscheid (DE)
(72) Erfinder: GROSS, Bernd, 40764 Langenfeld (DE); MUND, Harald, 52441 Linnich (DE)
(74) Vertreter: Wolff, Felix
(86) Internationale Anmeldenummer: PCT/EP2007/005594
(87) Internationale Veröffentlichungsnummer: WO 2007/147637

(56) Entgegenhaltungen:
- EP-A- 1 378 391
- DE-A1-102004 019 221
- DE-B3- 10 340 996
- US-A1- 2003 227 213

## Beschreibung

Die vorliegender Erfindung betrifft einen Fahrzeugsitz mit einem Sitzteil und mit einer Rückhaltevorrichtung zur Verhinderung des Durchrutschens eines Passagiers auf dem Fahrzeugsitz bei einer Unfallverzögerung, wobei die Rückhaltevorrichtung in eine eingefahrene inaktive Position einstellbar ist und wobei die Rückhaltevorrichtung in eine ausgefahrene aktive Position einstellbar ist, wobei das Sitzteil eine eine Sitzfläche definierende Polsterung und einen unterhalb der Polsterung vorgesehenen Polsterträger aufweist.

Solche Fahrzeugsitze sind allgemein bekannt. Beispielsweise ist aus der deutschen Offenlegungsschrift DE 102 31 794 A1 ein Kraftfahrzeugsitz mit einer Sitzfläche auf der Oberfläche einer Polsterung bekannt, wobei unterhalb der Sitzfläche eine Sitzschale vorgesehen ist und wobei zwischen der Sitzschale und der Sitzfläche des Sitzteiles ein bügelförmigen Verstellelement angeordnet ist, das in einem Crash-Fall aus einer Ausgangslage heraus derart bewegt werden kann, dass die Sitzfläche und das Verstellelement einer Vorverlagerung in Fahrzeuglängsrichtung des Beckens einer auf der Sitzfläche sitzenden Person entgegenwirkt. Bei diesem Fahrzeugsitz ist das Verstellelement beispielsweise bügelförmig ausgebildet und mit beiden Endabschnitten an den Seitenbereichen des Fahrzeugsitzes angelenkt. Dies hat den Nachteil, dass es zur Realisierung einer aktiven Rückhaltevorrichtung zur Verhinderung des Durchrutschens einer auf dem Fahrzeugsitz sitzenden Person (eine sogenannte Anti-Submarining-Rückhaltevorrichtung), d.h. einer Rückhaltvorrichtung, die von einer inaktiven in eine aktive, ausgefahrene Position überführt werden kann, vorgesehen ist, dass die Rückhaltevorrichtung beim Zusammenbau des Fahrzeugsitzes mit Strukturelementen des Fahrzeugsitzes, etwa Sitzseitenteilen oder eines Sitzteil-Rahmens oder dergleichen, verbunden werden muss, wodurch keine Modularität in dem Sinne vorhanden ist, dass erst zu einem späten Stadium der Sitzherstellung bzw. der Sitzfertigstellung entschieden werden kann, ob der Fahrzeugsitz mit einer Rückhaltevorrichtung ausgestattet werden soll oder nicht. Bei bekannten Fahrzeugsitzen müssen daher über einen größeren Teil der Herstellungskette des Fahrzeugsitzes eine größere Anzahl von Varianten des Fahrzeugsitzes berücksichtigt werden, was zu höherem Aufwand bei der Logistik und der Herstellung insgesamt führt. Aus der deutschen Offenlegungsschrift DE 199 43 595 A1 ist ein Fahrzeugsitz mit einem Sitzgestell, einem Sitzkissen und einem Sitzkissenträger bekannt, wobei in Längsrichtung etwa in der Mitte des Sitzkissenträgers eine Anti-Submarining-Rampe, angebracht ist, welche sich zum vorderen Rand des Sitzkissenträgers erstreckt und ungefähr die vordere Hälfte des Sitzkissenträgers bedeckt. Zwischen der Rampe und dem Sitzkissenträger oder in der Rampe eingebettet ist ein normalerweise zusammengefalteter Airbag vorgesehen, der im Crash-Fall aufgeblasen wird. Ein solcher Airbag ist jedoch vergleichsweise teuer, so dass insgesamt der bekannte Fahrzeugsitz vergleichsweise aufwändig ist.

Dokument US2003/0227213, der all Merkmale des Oberbegriffs des Anspruchs 1 aufweist, wird als nächstliegender Stand der Technik angesehen.

Der vorliegenden Erfindung liegt daher die Aufgabe zugrunde, einen Fahrzeugsitz mit einer Rückhaltevorrichtung zur Verhinderung des Durchrutschens eines auf dem Fahrzeugsitz befindlichen Passagiers im Falle einer Unfallverzögerung bereitzustellen, wobei der Fahrzeugsitz zum einen leicht und einfach mit möglichst geringem Aufwand und möglichst spät in der Herstellungskette des Fahrzeugsitzes mit einer solchen Rückhaltevorrichtung ausgestattet werden kann und wobei zum anderen die Rückhaltevorrichtung derart ausgestattet vorgesehen ist, dass die Rückhaltevorrichtung besonders einfach aber dennoch sicher mit dem Fahrzeugsitz verbindbar ist.

Die Aufgabe wird durch einen Fahrzeugsitz mit einem Sitzteil und mit einer Rückhaltevorrichtung zur Verhinderung des Durchrutschens eines Passagiers auf dem Fahrzeugsitz gelöst, wobei die Rückhaltevorrichtung in eine eingefahrene inaktive Position einstellbar ist und wobei die Rückhaltevorrichtung in eine ausgefahrene aktive Position einstellbar ist, wobei das Sitzteil in Fahrzeuglängsrichtung beidseitig Sitzseitenteile aufweist, wobei das Sitzteil eine eine Sitzfläche definierende Polsterung und einen unterhalb der Polsterung vorgesehenen Polsterträger aufweist und wobei ferner die Rückhaltevorrichtung zwischen dem Polsterträger und der Polsterung sowie beabstandet zu den Sitzseitenteilen angeordnet ist, wobei die Rückhaltevorrichtung ausschließlich an dem Polsterträger befestigt ist und wobei die Rückhaltevorrichtung als ein Add-on-Element ausgebildet ist, das wahlweise in der Fahrzeugeitz integierbar ist. Hierdurch ist es in besonders einfacher Weise möglich, dass die Modularität der Rückhaltevorrichtung gewährleistet ist, d.h. die Möglichkeit, erst zu einem späten Zeitpunkt in der Herstellungskette des Fahrzeugsitzes zu entscheiden, ob ein bestimmter Fahrzeugsitz mit einer erfindungsgemäßen Rückhaltevorrichtung ausgestattet sein soll oder nicht. Erfindungsgemäß ist die Rückhaltevorrichtung an dem Polsterträger durch Aufstecken und/oder Aufschieben und/oder Verclipsen und/oder Verkleben befestigbar. Hierdurch kann die Rückhaltevorrichtung in besonders einfacher und schneller Weise an dem Polsterträger befestigt werden und dennoch eine sichere Verbindung gewährleistet werden. Im Sinne der vorliegenden Erfindung wird unter einem Polsterträger eine einzige Strukturkomponente oder eine Mehrzahl von Strukturkomponenten des Sitzteils verstanden, welche zumindest in der Nähe der gegebenenfalls später an dem Sitz zu befestigenden Polsterung vorgesehen sind und die Polsterung halten bzw. stützen. Als Polsterträger kommt hierbei beispielsweise ein im wesentlichen über die gesamte Sitzfläche durchgehender Polsterträger als im wesentlichen durchgängige Polsterwanne bzw. Sitzwanne in Frage. Ferner kommt erfindungsgemäß beispielsweise eine sogenannte geteilte Sitzwanne bzw. Teilsitzwanne in Frage, bei der eine solche Teilsitzwanne etwa die vordere Hälfte oder lediglich die vorderen oder hinteren ca. 20% bzw. lediglich 10% der Polsterung stützt. Weiterhin kommen auch Strukturelemente wie beispielsweise rohrartige oder offene Versteifungselemente als Teil des Polsterträgers in Frage. Bei einem Polsterträger im Sinne der vorliegenden Erfindung kann dieser auch teilweise eine Unterfederung aufweisen.

Erfindungsgemäß ist es besonders bevorzugt, wenn die Rückhaltevorrichtung ein Aktuierungsmittel, insbesondere einen pyrotechnischen Linearaktuator und/oder einen reversibel arbeitenden Aktuator, aufweist, wobei das Aktuierungsmittel zwischen dem Polsterträger und der Polsterung angeordnet ist oder zwischen dem Polsterträger und der Polsterung abgestützt ist, wobei insbesondere eine Betätigung des Aktuierungsmittels bereits zeitlich vor dem Vorliegen einer Unfallverzögerung vorgesehen ist. Im Falle der Abstützung des Aktuierungsmittels zwischen dem Polsterträger und der Polsterung kann das Aktuierungsmittel teilweise auch unterhalb des Polsterträgers verlaufen bzw. angeordnet sein. Linearaktuatoren sind vergleichsweise klein und bauraumkompakt realsierbar, so dass hierdurch die Rückhaltevorrichtung besonders bauraumkompakt ausgestaltbar ist und die erfindungsgemäß modularisierte Einbauweise der Rückhaltevorrichtung in den Fahrzeugsitz besonders gut realisierbar ist. Erfindungsgemäß kann alternativ oder kumulativ zu einem irreversibel arbeitenden Aktuierungsmittel, beispielsweise ein pyrotechnischer Linearaktuator, auch ein reversibel arbeitendes Aktuierungsmittel, beispielsweise ein elektromotorisch angetriebener Linearaktuator, vorgesehen sein, der zusammen mit einer entsprechenden, einen Unfall voraussehenden Sensorik (Pre Crash Sensorik) zu einer Einstellung der ausgefahrenen aktiven Position der Rückhaltevorrichtung oder zu einer Einstellung einer intermediären Position der Rückhaltevorrichtung (zwischen der inaktiven Position und der aktiven ausgefahrenen Position) bereits zeitlich vor einem Unfallgeschehen und damit zeitlich vor dem Vorliegen einer Unfallverzögerung (d.h. einer für ein Unfallgeschehen typischen Verzögerung) führt.

Ferner ist es bevorzugt, wenn die Rückhaltevorrichtung ein von dem Aktuierungsmittel bewegbares Aufstellelement aufweist, wobei das Aufstellelement mittels des Aktuierungsmittels von einer der inaktiven Position der Rückhaltevorrichtung entsprechenden eingezogenen Position aus in eine der aktiven Position der Rückhaltevorrichtung entsprechenden ausgestellten Position einstellbar ist. Hierdurch ist es möglich, dass das Aufstellelement unabhängig von dem Aktuierungsmittel auf den jeweiligen Anwendungsfall hin optimierbar ist, beispielsweise hinsichtlich seiner Komprimierbarkeit (beispielsweise zur Energiedissipation während einer Unfallsituation) oder auch hinsichtlich seiner Abmessungen, die ihrerseits beispielsweise die Ausstellhöhe des Rückhaltemittels mitbestimmen.

Weiterhin ist es bevorzugt, dass zwischen der eingezogenen Position und der ausgestellten Position des Aufstellelements eine Drehung um eine im wesentlichen waagrecht und insbesondere quer zur Fahrzeugrichtung verlaufende Achse vorgesehen ist, wobei das Aufstellelement bevorzugt als plattenförmiges Aufstellelement vorgesehen ist und wobei die Drehung um die im wesentlichen waagrecht verlaufende Achse bevorzugt als eine Drehung in Fahrtrichtung vorgesehen ist. Hierdurch kann als Aufstellelement eine Platte Verwendung finden, die sich im wesentlichen über die gesamte Breite der bevorzugt modular einbaubaren Rückhaltevorrichtung erstreckt, wobei die Platte in der eingezogenen Position des Aufstellelementes im wesentlichen parallel zur Sitzfläche bzw. parallel zum Polsterträger angeordnet ist und in der ausgestellten Position des Aufstellelementes im wesentlichen senkrecht zur Sitzfläche bzw. senkrecht zum Polsterträger angeordnet ist. Zwischen dem Aufstellelement und der Polsterung des Sitzteils ist erfindungsgemäß bevorzugt eine Abdeckung der Rückhaltevorrichtung im Sinne einer Anti-Submariningrampe vorhanden. Hierdurch wird vorteilhafterweise gewährleistet, dass der Körper des Sitzinsassen im Falle einer Unfallsituation (d.h. einer negativen Beschleunigung bzw. einer Verzögerung, die einen vorbestimmten-Grenzwert übersteigt) eine Kraftwirkung auf die Rückhaltevorrichtung möglichst großflächig ausübt, so dass das Verletzungsrisiko des Sitzinsassen vermindert wird. Ein besonderer Vorteil einer Bewegung des Aufstellelements in Fahrzeugrichtung besteht darin, dass die Kraftwirkung des Aktuierungsmittels, insbesondere ein pyrotechnischer Linearaktuator, derart gewählt werden kann, dass die Kraftrichtung des Aktuierungsmittels bzw. deren Verlängerung jedenfalls nicht in Richtung von Hauptkörperteilen (insbesondere in Richtung des Beckens bzw. in Richtung des Rumpfs) des Sitzinsassen gerichtet ist. Hierdurch wird ebenfalls das Verletzungsrisiko reduziert.

Erfindungsgemäß ist es ferner bevorzugt, dass zwischen der eingezogenen Position und der ausgestellten Position des Aufstelielements eine Drehung zumindest eines Teils des Aufstellelements um eine im wesentlichen senkrecht verlaufende Achse vorgesehen ist, wobei das Aufstellelement bevorzugt als teleskopartig ausfahrbares Aufstellelement mit einem oder mehreren Ausfahrelementen vorgesehen ist. Hierdurch ist es vorteilhaft möglich, dass das Aufstellelement in kompakter Bauweise, beispielsweise durch teleskopartig ineinandergreifende becherartige Bauteile, realisierbar ist und zur Realisierung der ausgestellten Position ausgehend von der eingezogenen Position eine Drehbewegung wenigstens eines der becherartigen Bauteile um deren Zentrum erfolgt. Hierbei ist erfindungsgemäß bevorzugt eine spiralförmig vorgesehene Stift-Kulissen-Führung der wenigstens zwei becherartigen Bauteile zur Umsetzung der Drehbewegung in eine Ausstellbewegung vorgesehen. Zur Realisierung einer Verriegelung eines solchen Ausstellmittels kann die Stift-Kulissen-Führung mittels einer asymmetrischen Verzahnung derart ausgestaltet sein, dass lediglich eine Bewegung in Richtung der Ausstellbewegung möglich ist. Alternativ zu einer beispielhaften Stift-Kulissen-Führung kann es erfindungsgemäß bei der teleskopartig ausfahrbaren Variante des Aufstellelementes auch vorgesehen sein, dass beispielsweise zwei becherartige Bauteile gewindeartig ineinander greifen und durch eine Drehung des einen dieser Bauteile relativ zum anderen eine Aufstellung bewirkt wird.

Ferner ist es bevorzugt, wenn die Rückhaltevorrichtung ein Unterteil und ein Oberteil aufweist, wobei das Unterteil Befestigungselemente zur Verbindung der Rückhaltevorrichtung mit dem Polsterträger aufweist bzw. wenn der Polsterträger Befestigungselemente zur Verbindung der Rückhaltevorrichtung mit dem Polsterträger aufweist. Hierdurch ist es in einfacher Weise möglich, die Verbindung zwischen der Rückhaltevorrichtung und dem Polsterträger herzustellen, ohne dass aufwändige Werkzeuge hierfür erforderlich sind bzw. die Tätigkeit hohe Qualifikationsanforderungen stellt. Erfindungsgemäß ist eine Befestigung durch Aufstecken bzw. Aufschieben bzw. Verclipsen bzw. Verkleben vorgesehen. Es können auch Kombinationen von zwei oder mehrerer solcher Befestigungsmöglichkeiten eingesetzt werden, etwa zur Sicherung einer Aufsteckverbindung oder eine Aufschiebverbindung. Alternativ zu der Ausführungsvariante der Rückhaltevorrichtung mit einem Unterteil und einem Oberteil kann es erfindungsgemäß auch vorgesehen sein, dass die Funktionalität des Unterteils (etwa die Bereitstellung von Anbindungsstellen von Hebeln oder dergleichen) durch den Polsterträger übernommen wird (Vollintegration des Unterteils in den Polsterträger) und somit das Unterteil eingespart werden kann, so dass das Gewicht reduziert werden kann und Kosten eingespart werden können. Beispielsweise ist es in diesem Fall vorgesehen, dass die Rückhaltevorrichtung, also beispielsweise Hebelanlenkungen oder dergleichen der Rückhaltevorrichtung, mit dem Unterteil verschraubt und/oder vernietet und/oder verstiftet werden.

Ferner ist es bevorzugt, wenn die Rückhaltevorrichtung ein Verriegelungsmittel aufweist, wobei das Verriegelungsmittel bevorzugt durch die Bewegung des Aufstellelements bewegbar vorgesehen ist, wobei insbesondere das Verriegelungsmittel eine Kulisse und einen Bolzen aufweist, wobei der Bolzen einen durchmesserverkleinerten axialen ersten Bereich und einen durchmesservergrößerten axialen zweiten Bereich aufweist und wobei eine axiale Bewegung des Bolzens zur Herbeiführung der Verriegelung vorgesehen ist. Hierdurch ist es erfindungsgemäß vorteilhaft möglich, dass eine modulare Bauweise des Verriegelungsmittels derart vorgesehen sein kann, dass die Blockierkraft des Verriegelungsmittels weitgehend unabhängig von den sonstigen Eigenschaften der Rückhaltevorrichtung eingestellt werden kann. Beispielsweise ist es erfindungsgemäß möglich, dass ein Schlepphebel an seinem dem Aufstellelement gegenüberliegenden Ende in einem Gehäuse geführt ist, welches eine Mehrzahl von federbelasteten und in der eingezogenen Position des Aufstellelements an den Schlepphebel andrückenden Rastbolzen aufnimmt. Sobald der Schlepphebel ausreichend weit in Richtung auf die ausgestellte Position des Aufstellelements ausgefahren ist, verriegelt einer der Rastbolzen die Rückbewegung des-Schlepphebels. Durch eine Mehrzahl solcher Rastbolzen können eine Mehrzahl von Einrastpositionen definiert werden. Dies ist insbesondere für den Fall vorteilhaft, dass (wegen Fehlfunktion des Aktuierungsmittels oder wegen der besonderen Situation einer Sitzbelegung etwa durch eine abnorm große oder eine abnorm kleine Person als Sitzinsassen) keine Bewegung des Ausstellelements in seine am weitesten ausgestellte Position erfolgt. Eine weitere Ausführungsvariante der Rückhaltevorrichtung zur alternativen Realisierung eines Verriegelungsmittels kann erfindungsgemäß eine Kulisse mit einem Anfangsbereich und mit einem Endbereich vorsehen, wobei in die Kulisse ein Bolzen eingreift, der zusammen mit dem Aufstellelement bewegt wird, wobei sich der Bolzen in der inaktiven Position der Rückhaltevorrichtung im Anfangsbereich der Kulisse befindet und in der aktiven Position der Rückhaltevorrichtung im Endbereich der Kulisse befindet und wobei die Form der Kulisse derart gestaltet ist, dass zumindest in der (vollständig) aktivierten Position bzw. aktiven Position der Rückhaltevorrichtung eine Bewegung des Aufstellelementes bzw. des Bolzens zurück verhindert. Hierbei kann die Kulisse gemäß einer weiteren Variante des Verriegelungsmittels beispielsweise eine Krümmung bzw. eine Knickstelle derart aufweisen, dass der mit dem Aufstellelement bewegte Bolzen aufgrund der in einer Unfallsituation vorliegenden Kraftverhältnisse sich nicht mehr zurück in den Anfangsbereich bewegen kann bzw. eine solche Zurückbewegung sehr unwahrscheinlich ist. Ferner kann in einer weiteren Variante anstelle der Kulisse eine Steuerkurve mit ebenfalls einem Anfangsbereich und einem Endbereich für einen Bolzen vorgesehen sein, wobei die Steuerkurve im Endbereich eine Ausnehmung derart aufweist, dass ebenfalls der mit dem Aufstellelement bewegte Bolzen aufgrund der in einer Unfallsituation vorliegenden Kraftverhältnisse sich nicht mehr zurück in den Anfangsbereich bewegen kann bzw. eine solche Zurückbewegung sehr unwahrscheinlich ist. Hierbei kann es in bevorzugter Weise vorgesehen sein, dass das die Steuerkurve aufweisende Element oder Bauteil in Richtung auf die inaktive Position federvorbelastet ist. Bei den Ausführungsvarianten mit einer Kulisse kann in gleicher Weise vorteilhaft vorgesehen sein, dass das die Kulisse aufweisende Element oder Bauteil in Richtung auf die inaktive Position federvorbelastet ist. Ferner kann in einer weiteren Variante eine Kulisse in einer in Anlehnung an ein Schlüsselloch gestalteten Weise mit einem eine verringerte lichte Öffnung aufweisenden Anfangsbereich und einem eine vergrößerte lichte Öffnung aufweisenden Endbereich derart ausgeformt sein und mit einem Bolzen zusammenwirken, dass der Bolzen in einem ersten axialen Bereich einen kleineren Durchmesser aufweist und mit dem Anfangsbereich zusammenwirkt und das der Bolzen beim Erreichen des Endbereichs der Kulisse (was bei einer Bewegung des Aufstellelements in Richtung auf die aktive Position zu erfolgt) aufgrund einer Federvorspannung des Bolzens mit einem zweiten axialen und einen größeren Durchmesser aufweisenden Bereich des Bolzens in den Endbereich gedrückt wird. In einer weiteren Ausführungsvariante der Rückhaltevorrichtung zur alternativen Realisierung eines Verriegelungsmittels kann erfindungsgemäß das Aufstellelement mit dem Oberteil, insbesondere mit Löchern oder Ausnehmungen, derart zusammenwirken, dass beim Erreichen der aktiven Position eine Zurückbewegung des Aufstellelements verhindert wird. Erfindungsgemäß ist es ferner vorgesehen, dass Teilaspekte der verschiedenen Varianten der Rückhaltevorrichtung mit einem Verriegelungsmittel miteinander kombiniert werden können; so kann etwa die zuletzt genannte Variante (Löcher oder Ausnehmungen im Aufstellelement) mit den anderen Varianten kombiniert werden.

Weitere Gegenstände der vorliegenden Erfindung betreffen eine erfindungsgemäße Rückhaltevorrichtung für einen Fahrzeugsitz sowie ein Verfahren zur Herstellung eines erfindungsgemäßen Fahrzeugsitzes, wobei in einem ersten Schritt die tragende Struktur des Fahrzeugsitzes hergestellt wird und wobei in einem zweiten Schritt die Rückhaltevorrichtung mit dem Polsterträger verbunden wird. Hierdurch ist es insbesondere möglich, dass die kompletten Herstellungsschritte zur Herstellung der Strukturelemente des Fahrzeugsitzes - etwa der Rahmen des Sitzteils, der Rahmen eines Lehnenteils, die Unterkonstruktion des Sitzteils und dergleichen - im ersten Herstellungsschritt erfolgen und beispielsweise im Werk des Sitzteilherstellers vorgenommen werden. Die Integration der Rückhaltevorrichtung in den Fahrzeugsitz bzw. mit dem Sitzteil derjenigen Fahrzeugsitze, die mit der Rückhaltevorrichtung ausgestattet werden sollen, kann dann in einem Herstellungswerk in der Nähe der Endproduktion des Fahrzeugsitzes bzw. des Fahrzeugs, in den der Fahrzeugsitz eingebaut werden soll, vorgenommen werden, wobei für diesen Einbau der Rückhaltevorrichtung in den Fahrzeugsitz erfindungsgemäß erheblich geringere Ausrüstungserfordemisse und weiterhin erheblich geringer Qualifikationsanforderungen der den Einbau durchführenden Mitarbeiter vorliegen als für die Herstellung der Strukturelemente des Fahrzeugsitzes, wofür beispielsweise die Herstellung von Schweißverbindungen notwendig sind.

Ausführungsbeispiele der Erfindung sind in der Zeichnung dargestellt und in der nachfolgenden Beschreibung näher erläutert.
**Figur 1** zeigt schematisch eine Seitenansicht eines erfindungsgemäßen Fahrzeugsitzes sowie eine perspektivische Ansicht einer Sitzschale bzw. eines Polsterträgers eines Sitzteils eines erfindungsgemäßen Fahrzeugsitzes mit einer teilweise aufgeschnittenen Darstellung einer erfindungsgemäßen Rückhaltevorrichtung.
**Figuren 1a** **und** **1b** zeigen schematisch perspektivische Ansichten verschiedener Ausführungen eines Polsterträgers eines Sitzteils zusammen mit den Sitzseitenteilen des Sitzteils und der Rückhaltevorrichtung.
**Figur 2** zeigt schematisch eine perspektivische Ansicht einer Sitzschale bzw. eines Polsterträgers eines Sitzteils zusammen mit den Sitzseitenteilen des Sitzteils des erfindungsgemäßen Fahrzeugsitzes mit einer Darstellung der erfindungsgemäßen Rückhaltevorrichtung.
**Figuren 3 und 4** zeigen schematisch in perspektivischer Ansicht eine Sitzschale bzw. einen Polsterträger eines erfindungsgemäßen Fahrzeugsitzes mit einer Ausführungsform der Rückhaltevorrichtung in ihrer inaktiven Position (Figur 3) bzw. in ihrer aktiven Position (Figur 4).
**Figuren 4a****,** **4b und 4c** zeigen Ausführungsvarianten der Rückhaltevorrichtung in Seitenansicht bzw. in perspektivischer Darstellung.
**Figuren 5 und 7** zeigen schematisch in Draufsicht bzw. in Seitenansicht unterschiedliche Ausführungsformen einer Befestigung der erfindungsgemäßen Rückhaltevorrichtung am Polsterträger,
**Figur 6** zeigt einen Ausschnitt der Verbindung der erfindungsgemäßen Rückhaltevorrichtung mit dem Polsterträger.
**Figur 8** zeigt schematisch in Seitenansicht einen Ausschnitt der erfindungsgemäßen Rückhaltevorrichtung mit einer weiteren Ausführungsform eines Aufstellelements.
**Figuren 9a, 9b, 9c****,** **9d, 9e, 9f****,** **9g, 9h****,** **9i, 9j****,** **9k und 9l** zeigen Ausführungsvarianten der Rückhaltevorrichtung in perspektivischer Darstellung.

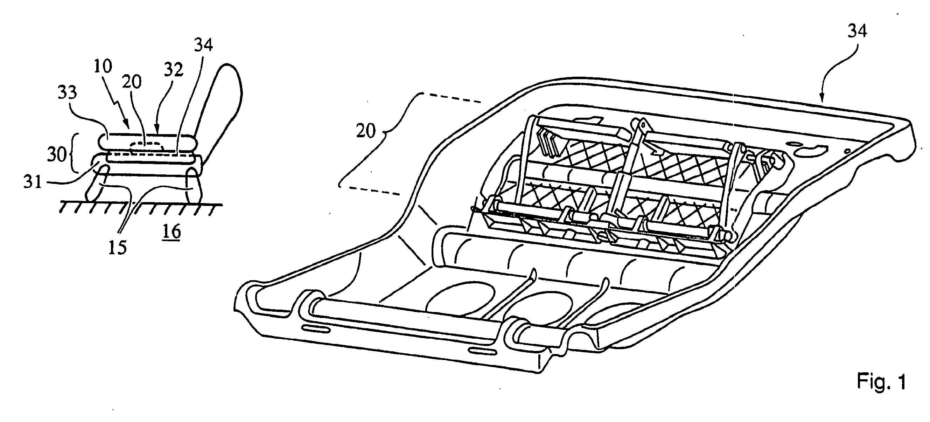

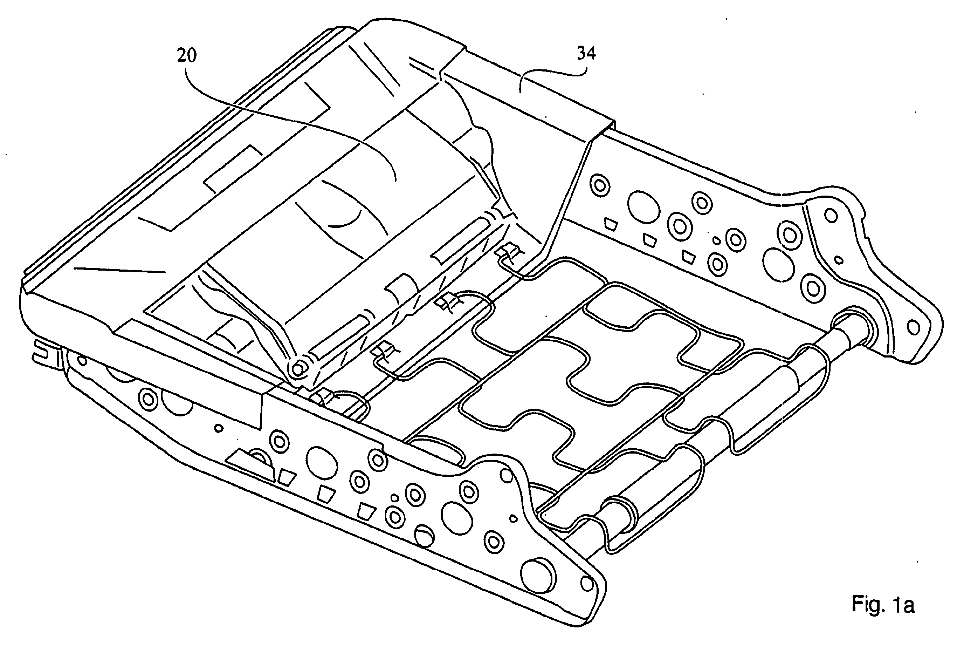

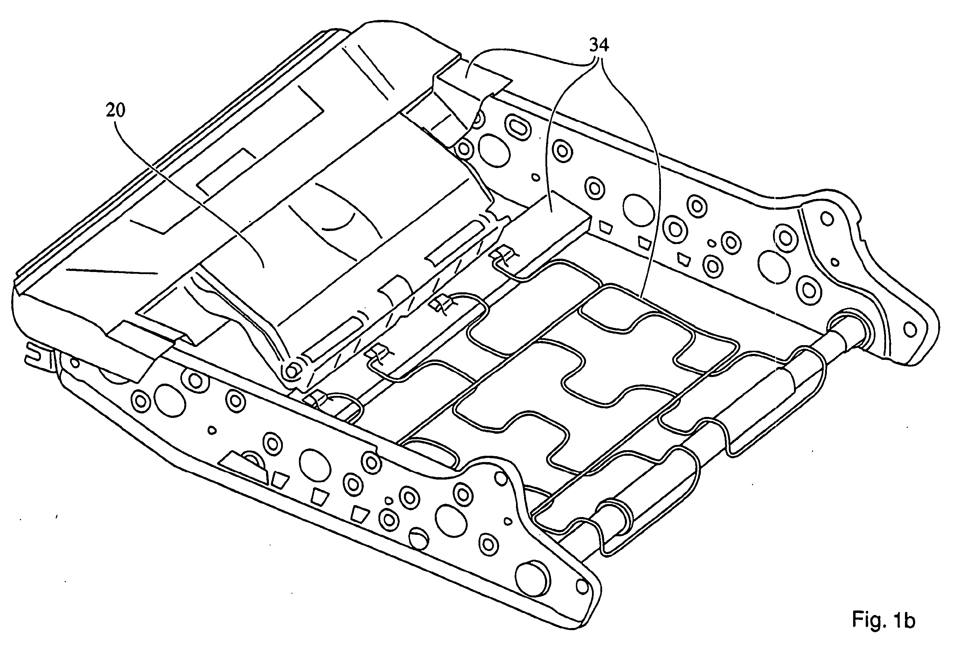

In Figur 1 ist (im linken Teil der Figur) schematisch eine Seitenansicht eines erfindungsgemäßen Fahrzeugsitzes 10 dargestellt. Der Fahrzeugsitz 10 umfasst ein Sitzteil 30 sowie in der Regel auch ein nicht mit einem Bezugszeichen versehenes Lehnenteil. Das Sitzteil 30 weist erfindungsgemäß insbesondere eine rahmenartige Struktur mit wenigstens zwei seitlichen Sitzseitenteilen 31 auf. Innerhalb dieser rahmenartigen Struktur weist das Sitzteil 30 ein Sitzschale 34 bzw. ein Polsterträger 34 auf. Mit der Sitzschale 34 bzw. mit dem Polsterträger 34 ist eine Polsterung 33 bzw. ein Sitzkissen 33 verbunden. Das Sitzteil 30 ist zur Bodenbaugruppe 16 des Fahrzeuginnenraums bzw. zur Karosseriestruktur 16 des Fahrzeugs hin mittels eines Sitzunterbaus 15 angebunden. Mittels des Sitzunterbaus 15 kann es erfindungsgemäß vorgesehen sein, dass der komplette Fahrzeugsitz 10 längsverstellbar und/oder höhen- und/oder neigungsverstellbar angebunden ist. Hierzu ist im linken Teil der Figur 1 der Sitzunterbau 15 als angedeutete Lenker dargestellt, die durch Drehung bzw. Schwenkung eine entsprechende Sitzeinstellung bewirken können. Die Polsterung 33 weist eine Sitzfläche 32 auf, auf der ein Benutzer des Fahrzeugsitzes 10 bzw. ein Fahrzeuginsasse bzw. ein Passagier Platz nehmen kann. Erfindungsgemäß ist es besonders bevorzugt vorgesehen, dass die Sitzschale 34 bzw. der Polsterträger 34 samt der Polsterung 33 und der Sitzfläche 32 gegenüber dem restlichen Sitzteil. 30 höhen- und/oder neigungsverstellbar ausgebildet ist.

Das Sitzteil 30 des erfindungsgemäßen Fahrzeugsitzes 10 kann als beispielsweise als ein 2-fach oder 4-fach oder 6-fach oder 8-fach oder mehrfach verstellbarer Unterbau vorgesehen sein, wodurch beispielsweise die Sitzhöhe und/oder die Sitzneigung und/oder die Sitzlängsverstellung und/oder die Sitzlängeneinstellung (Oberschenkelauflagelänge) einstellbar ist. Der Polsterträger ist in Figur 1 weitgehend als eine separate und ungeteilte Sitzwanne 34 bzw. als ein entsprechender Polsterträger 34 dargestellt, kann aber auch als ein geteilter Polsterträge 34 bzw. eine entsprechende Sitzwanne 34 vorgesehen sein, wie anhand der in den Figuren 1a und 1b dargestellten Beispiele von Ausführungsvarianten eines Polsterträgers 34 erkennbar ist. Insbesondere wird als Polsterträger eine einzige Strukturkomponente oder eine Mehrzahl von Strukturkomponenten des Sitzteils verstanden, welche zumindest an eine Polsterung des Sitzes angrenzt bzw. in der Nähe einer solchen Polsterung vorgesehen ist, etwa im maximalen Abstand von 10 mm einer solchen Polsterung, und wobei eine solche Polsterung vom Polsterträger bzw. seinen Komponenten getragen oder gestützt bzw. gehalten wird. Als Polsterträger kommt hierbei etwa ein durchgehender Polsterträger (Polsterwanne bzw. Sitzwanne) (Figur 1) oder eine geteilte Sitzwanne bzw. Teilsitzwanne (Figur 1 a) in Frage oder aber auch Strukturelemente wie beispielsweise rohrartige oder offene Versteifungselemente (Figur 1 b) als Teil des Polsterträgers.

Erfindungsgemäß ist zwischen dem Polsterträger 34 und der Sitzfläche 32 eine Rückhaltevorrichtung 20 angeordnet, mittels der ein Durchrutschen des Benutzers des Fahrzeugsitzes 10 bei einer Unfallverzögerung vermieden oder reduziert werden kann. Die Rückhaltevorrichtung 20 ist als eine aktive Anti-Submarining-Vorrichtung vorgesehen und ist erfindungsgemäß als ein sogenanntes Add-on-Element ausgebildet, das wahlweise in den Fahrzeugsitz 10 integriert werden kann oder auch nicht (je nach Ausstattungswunsch des Kunden bzw. den Vorgaben des Herstellers). Eine solche aktive Anti-Submarining-Komponente kann einen wesentlichen Beitrag zur Verbesserung des Insassenschutzes beim Frontalcrash bieten. Die Einheit kann als Add-on-Element in nahezu allen Vordersitzen sowie Rücksitzen eingesetzt werden. Hierbei kann die Rückhaltevorrichtung 20 besonders bevorzugt in einem sogenannten JIT-Werk (Just-in-Time-Werk), d.h. in vergleichsweise großer Nähe zur Endmontage des Fahrzeugs bzw. des kompletten Sitzmoduls, dadurch in den Fahrzeugsitz 10 integriert werden, dass lediglich eine Befestigung der Rückhaltevorrichtung 20 am Polsterträger 34 erfolgt, beispielsweise über eine bekannte Befestigungstechnik wie Clipsen, Schrauben, Nieten. Besonders vorteilhaft ist hierbei, dass keinerlei Schweißarbeiten anfallen sowie keinerlei Modifikationen an Strukturteilen des Sitzteils 30 erforderlich sind. Ferner ist es erfindungsgemäß besonders vorteilhaft, dass eine identische Sitzschale 34 bzw. ein identischer Polsterträger 34 sowohl für einen Fahrzeugsitz 10 mit der Rückhaltevorrichtung 20 als auch für einen Fahrzeugsitz 10 ohne die Rückhaltevorrichtung 20 verwendet werden kann: Hierdurch können die Produktionskosten für solche Fahrzeugsitze 10 erheblich reduziert werden bzw. es wird der logistische Mehraufwand für einen flexiblen Einsatz der Rückhaltevorrichtung 20 auf beliebigen solcher Fahrzeugsitzen stark reduziert.

Im rechten Teil der Figur 1 ist schematisch eine perspektivische Ansicht einer Sitzschale 34 bzw. eines Polsterträgers 34 eines Sitzteils 30 eines erfindungsgemäßen Fahrzeugsitzes 10 mit einer teilweise-aufgeschnittenen Darstellung einer erfindungsgemäßen Rückhaltevorrichtung 20 dargestellt.

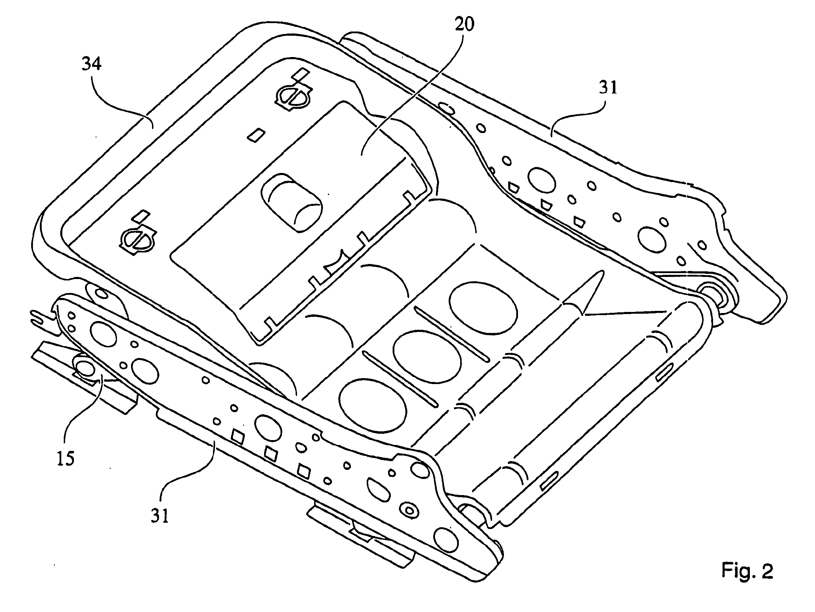

Figur 2 zeigt schematisch eine perspektivische Ansicht einer Sitzschale 34 bzw. eines Polsterträgers 34 eines Sitzteils 30 zusammen mit den Sitzseitenteilen 31 des Sitzteils 30 des erfindungsgemäßen Fahrzeugsitzes 10 mit einer Darstellung der erfindungsgemäßen Rückhaltevorrichtung 20. Erkennbar ist aus der Figur 2 ebenfalls ein Teil des Sitzunterbaus 15, der in diesem Fall als Verstelllenker zur Höhen- und/oder Neigungseinstellung des Fahrzeugsitzes 10 ausgebildet ist und mit den Sitzseitenteilen 31 verbunden ist.

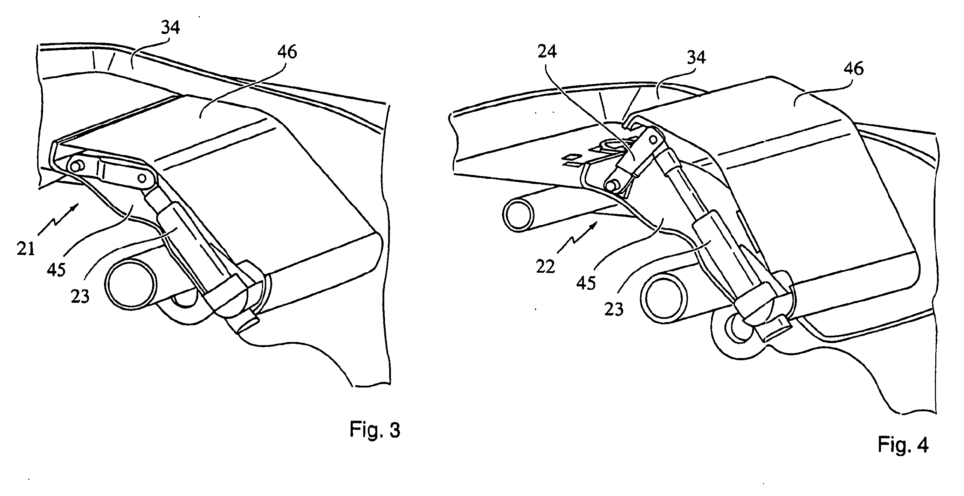

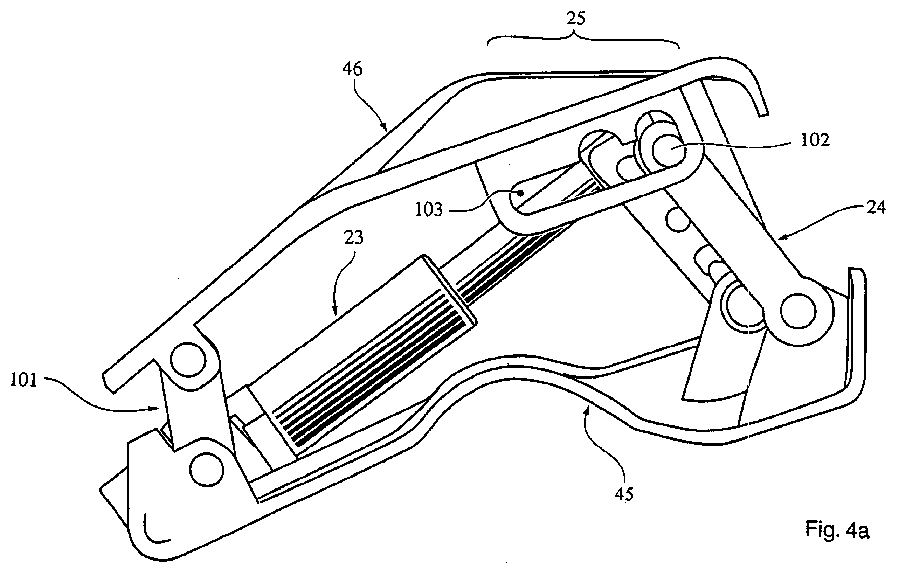

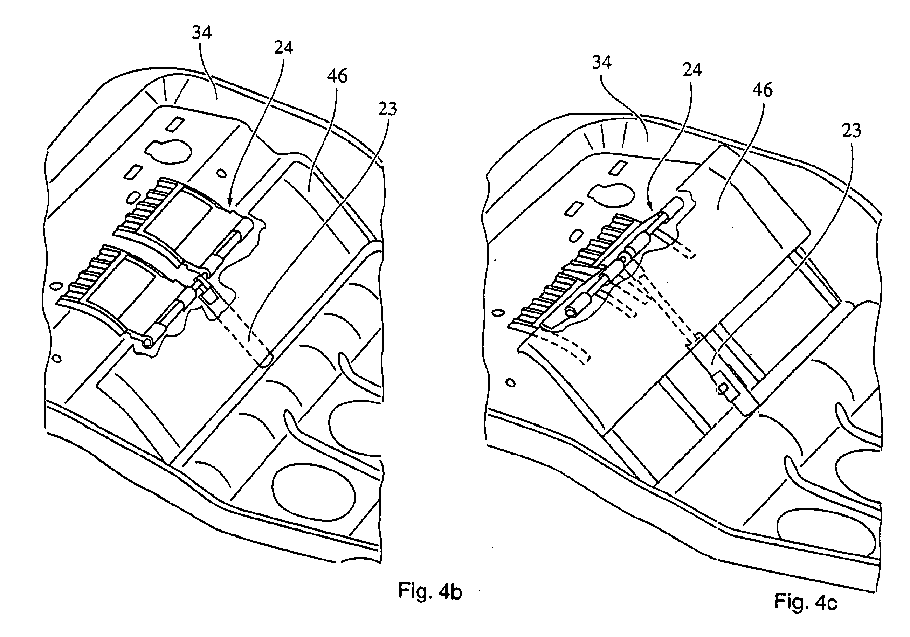

Figuren 3 und 4 zeigen schematisch und aufgeschnitten in perspektivischer Ansicht die Sitzschale 34 des erfindungsgemäßen Fahrzeugsitzes 10 mit einer Ausführungsform der Rückhaltevorrichtung 20 in ihrer inaktiven Position 21 (Figur 3) bzw. in ihrer aktiven Position 22 (Figur 4). Erkennbar ist, dass in der dargestellten Ausführungsform der Rückhaltevorrichtung 20 dieselbe ein Gehäuse aus einer Oberschale 46 und einer Unterschale 45 aufweist. Das Gehäuse der Rückhaltevorrichtung 20 kann beispielsweise ein Stahlmaterial, ein Aluminiummaterial, ein Magnesiummaterial, ein Kunststoffmaterial oder eine Kombination solcher Materialien umfassen. Erkennbar ist ferner, dass in der aktiven Position 22 (Figur 4) die Oberschale 46 mittels eines Aktuierungsmittels 23 nach oben hin, d.h. zur Sitzfläche 32 (die jedoch in Figur 4 nicht dargestellt ist) ausgestellt ist. Hierdurch erfährt der nicht dargestellte Beckenknochen (bzw. der Sitzbeinhöcker) eines Sitzbenutzers vor allem im Falle eines Frontalunfalls zu einem früheren Zeitpunkt einen größeren Widerstand, so dass ein Durchrutschen des Beckens bzw. der Hüfte des Benutzers (Vorverlagerung (Verschiebung in X-Richtung) des sogenannten H-Punktes bzw. Hip-Punktes bzw. Hüftpunktes) vermieden bzw. dessen Wahrscheinlichkeit oder Ausmaß erheblich reduziert werden kann. Hierdurch können in vorteilhafter Weise bevorzugt im Armaturenbrett angeordnete Knieairbags und/oder Maßnahmen zur Gurtstraffung entfallen oder reduziert werden. Dies kann erfindungsgemäß insbesondere für 3-türige Fahrzeuge besonders vorteilhaft sein.

Zur Aufstellung der Oberschale 46 der Rückhaltevorrichtung 20 umfasst diese ein in den Figuren 3 und 4 lediglich als Hebel dargestelltes Aufstellelement 24, welches von dem Aktuierungsmittel 23 angetrieben wird. In dieser Ausführungsform der Rückhaltevorrichtung 20 wird das Aufstellelement 24 bei der Bewegung zwischen der inaktiven Position 21 der Rückhaltevorrichtung 20 und der aktiven Position 22 der Rückhaltevorrichtung 20 um eine im wesentlichen horizontale (parallel zur Sitzfläche 32 verlaufende) Drehachse gedreht bzw. geschwenkt. Hierdurch stellt sich das Aufstellelement 24 von einer der inaktiven Position 21 der Rückhaltevorrichtung 20 entsprechenden eingezogenen Position 21' in eine der aktiven Position 22 der Rückhaltevorrichtung 20 entsprechenden ausgestellten Position 22' ein, so dass die Oberschale 46 ausgestellt ist und hierdurch eine erfindungsgemäß relativ große Auftrefffläche für den Beckenbereich eines Benutzers in einer Unfallsituation zur Verfügung stellt. Eine alternative Ausführungsform des Aufstellelements 24 ist eine im wesentlichen plattenförmige Ausgestaltung des Aufstellelementes 24. Einer im wesentlichen plattenförmige Ausgestaltung des Aufstellelements 24 entspricht ein im wesentlichen flächig sich erstreckendes Aufstellelement 24, wobei ein solches Element beispielsweise wenigstens doppelt so lang (in der Regel etwa in Y-Richtung ausgerichtet) wie breit (in der Regel in seiner inaktiven Position etwa in X-Richtung ausgerichtet) ist und eine Tiefe von maximal einem Drittel seiner Breite aufweist. Alternativ zu einem solchen im wesentlichen plattenförmigen Element als Aufstellelement kann es erfindungsgemäß auch vorgesehen sein, dass ein Rohr mit aufgeschweißtem Blech oder ein anderes Strukturelement der Rückhaltevorrichtung 20 als Aufstellelement 24 dient.

Das Aufstellelement 24 ist erfindungsgemäß im Ausführungsbeispiel gemäß Figuren 3 und 4 drehbar bzw. schwenkbar an der Unterschale 45 oder direkt an dem Polsterträger 34 angelenkt. Diese zuletzt genannte alternative Anbindung des Aufstellelements 24 ist insbesondere dann vorteilhaft, wenn die Unterschale 45 nicht vorhanden ist. Die Anbindung des Aufstellelements 24 an der Unterschale 45 und/oder am Polsterträger 34 kann insbesondere mittels einer oder mittels zweier oder mittels dreier Lagerstellen oder auch mittels mehr als drei Lagerstellen vorgesehen sein. Vorteilhafterweise sind zwei Lagerstellen an den seitlichen Enden des Aufstellelements 24 (in Y-Richtung) vorgesehen.

Das Aufstellelement 24 und/oder das Oberteil 46 kann erfindungsgemäß bevorzugt eine Mehrzahl von Materialzonen zur Herbeiführung eines Deformationsverhaltens bzw. eines Energiedissipationsverhaltens aufweisen. Hierbei weisen unterschiedliche Materialzonen insbesondere unterschiedliches Deformationsverhalten auf. Alternativ oder kumulativ ist das Aufstellelement 24 und/oder das Oberteil 46 zumindest teilweise reversibel deformierbar vorgesehen, wobei das Aufstellelement 24 vorzugsweise einen Stoßdämpfer oder einen Gasdruckdämpfer bzw. eine Mehrzahl solcher Elemente aufweist. Hierdurch kann für unterschiedlich starke Unfallsituationen bzw. für unterschiedliche zu übertragende Kräfte zwischen dem Benutzer des Fahrzeugsitzes und dem Fahrzeugsitz ein unterschiedliches Deformationsverhalten realisiert werden.

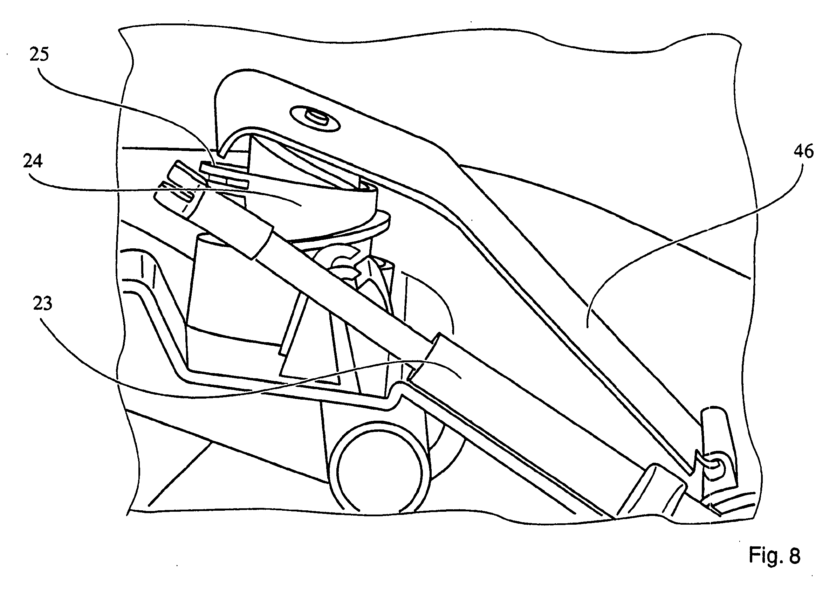

Alternativ zu einem um eine im wesentlichen horizontale Drehachse drehbaren Aufstellelement 24 ist es erfindungsgemäß auch möglich und in Figur 8 anhand einer alternativen Ausführungsform des Aufstellelements schematisch dargestellt, dass das Aufstellelement 24 um eine im wesentlichen vertikale Drehachse (im wesentlichen senkrecht auf der Sitzfläche 32 stehend) drehbar ist oder zumindest in Teilen drehbar ist. Hierbei weist das Aufstellelement 24 beispielsweise zwei insbesondere becherartig ausgebildete Hubkolben auf, die eine spiralförmige Zapfen-Kulissen-Führung aufweisen sowie relativ zu einander drehbar sind und die bei einer Drehung eine axiale Ausstellbewegung entlang beispielsweise der gemeinsamen Mittelachse ausführen. Alternativ zu einer Drehung um eine gemeinsame Mittelachse kann auch eine exzentrische Drehung des einen Hubkolbens relativ zu den Hubkolben oder relativ zu einem anderen Hubkolben vorgesehen sein. Hierdurch kann der für die Rückhaltevorrichtung 20 benötigte Bauraum sowie das Gewicht reduziert werden. Eine Verriegelung des Aufstellelements 24 in der ausgestellten Position kann über eine bevorzugt asymmetrische Verzahnung (als Verriegelungsmittel 25) zwischen den beiden drehbar zueinander angeordneten Teilen realisiert sein. Weiterhin kann alternativ oder kumulativ zur Verriegelung des Aufstellelements in der ausgestellten Position ein Energiedissipationsverhalten eines solchermaßen vorgesehenen Aufstellelements 24 relativ einfach dadurch bewerkstelligt werden, dass im zentralen Bereich der becherartig ausgebildeten Hubkolben entweder ein Stoßdämpferelement oder ein Gasdruckdämpfer oder ein Deformationsmaterial wie etwa ein Metallschaum, eine Wabenstruktur oder ein ähnliches bei einer Deformation energiedissipierendes Material angeordnet ist. Bei der dritten Ausführungsform des Aufstellelements 24 können auch zwei oder mehr Hubkolbeneinheiten vorgesehen sein.

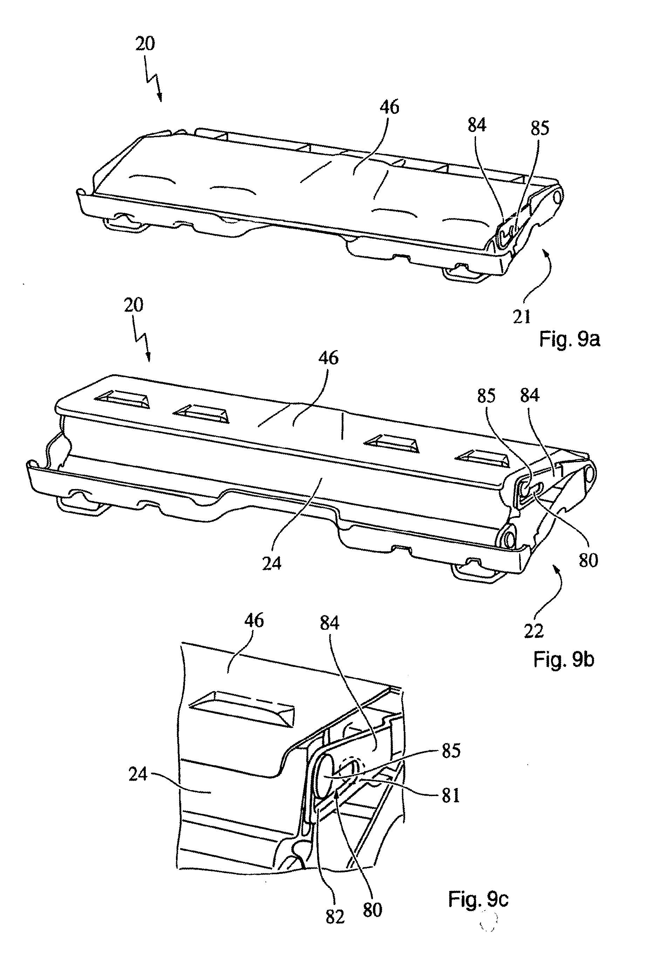

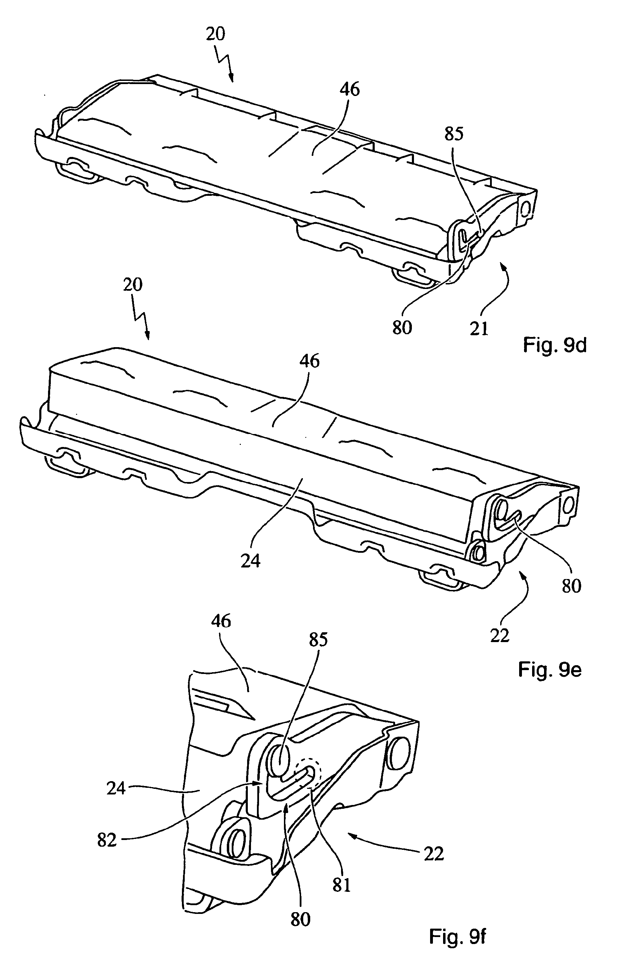

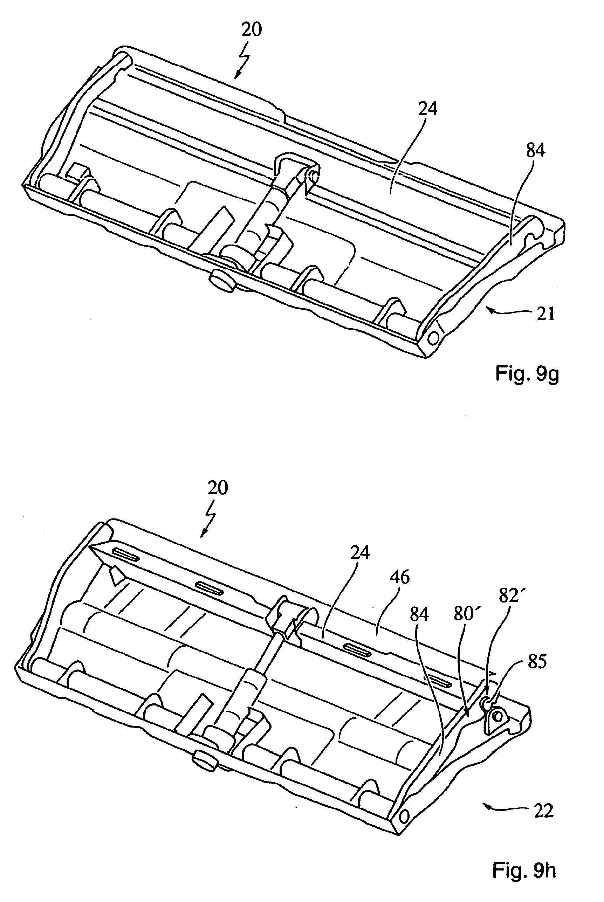

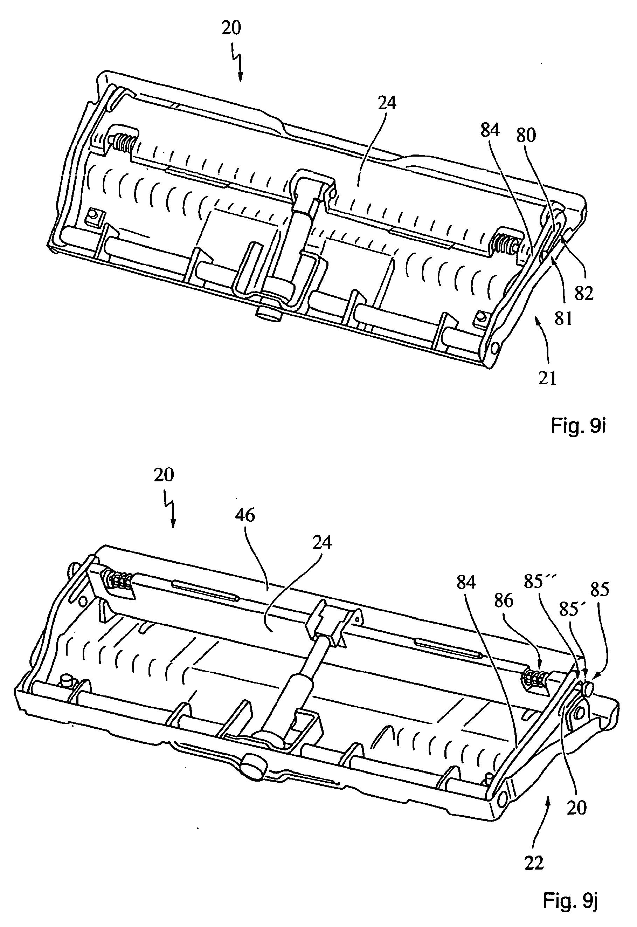

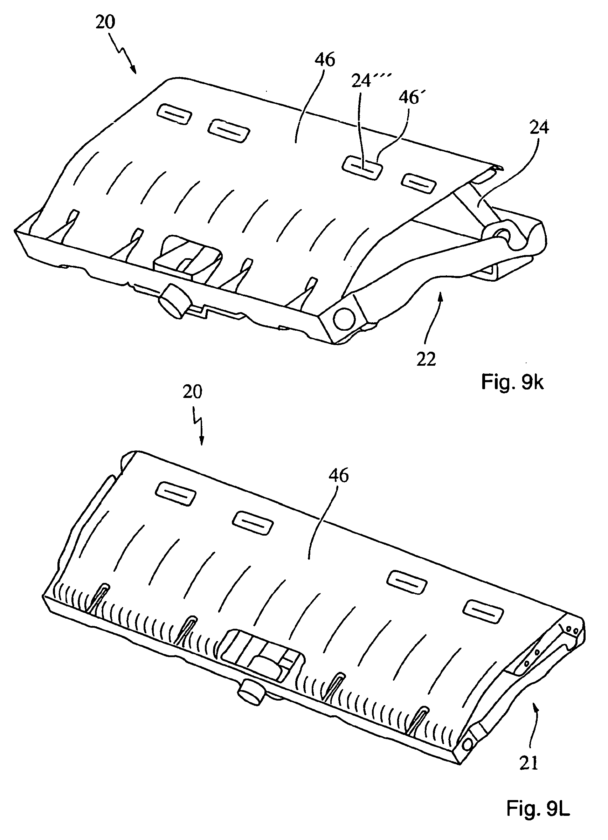

Alternative Ausführungsvarianten der Rückhaltevorrichtung 20 sind in den Figuren 4a, 4b und 4c sowie in den Figuren 9a, 9b, 9c, 9d, 9e, 9f, 9g, 9h, 9i, 9j, 9k und 9l in Seitenansicht bzw. in perspektivischer Ansicht dargestellt.

In der Figur 4a ist eine Variante der Rückhaltevorrichtung 20 mit einer variablen Anbindung des Oberteils 46 in Seitenansicht dargestellt. Die variable Anbindung des Oberteils 46 der Rückhaltevorrichtung 20 wird im dem Aufstellelement 24 abgewandten Bereich durch einen Hebel 101 realisiert, der in der Ausgangsstellung (inaktive Position der Rückhaltevorrichtung 20) zu dem Aufstellelement 24 hin eingestellt bzw. geschwenkt ist. Bei einer Aktivierung der Rückhaltevorrichtung 20 wird sowohl der Hebel 101 als auch das Aufstellelement 24 in entgegengesetzter Drehrichtung gedreht, wobei das Oberteil 46 sowohl im Bereich des Aufstellelementes 24 (vorne) als auch im dem Aufstellelement 24 abgewandten Bereich vom Polsterträger 34 abhebt bzw. aufstellt, wodurch eine besonders gute Rückhaltewirkung erzielt wird. Bei der Aktivierung der Rückhaltevorrichtung 20 wird ebenfalls ein Zapfen 102 des Aufstellelements innerhalb eines Langlochs 103 in X-Richtung bewegt. Ein solches Langloch 103 kann mit Verrastausnehmungen ausgebildet sein, die zusammen mit dem Zapfen 102 ein Beispiel.für ein Verriegelungsmittel 25 bilden. Bei einer nicht dargestellten Variante der Rückhaltevorrichtung 20 ist das Oberteil 46 wie in Figur 4a durch den Hebel 101 variabel angebunden, jedoch ist der Hebel in der inaktiven Position in Richtung von dem Aufstellelement 24 weg gedreht eingestellt und es ist im Bereich des Aufstellelements 24 kein Langloch 103, sondern eine lediglich schwenkbare Lagerung des Oberteil 46 vorhanden, so dass der Hebel 101, das Oberteil 46 und das Aufstellelement 24 ein Viergelenk bilden. Hierdurch kann eine Bauraumoptimierung bewirkt werden. Die Viergelenk-Kinematik (bzw. eine entsprechende Kinematik mit variabler Anbindung des Oberteils 46 entsprechend Figur 4a) weist gegenüber der in Figur 3 und 4 dargestellten Ausführungsform den Vorteil auf, dass die Oberschale 46 des Gehäuses der Rückhaltevorrichtung 20 auch im hinteren Bereich angehoben wird. Dies kann zu einer besseren Rückhaltefunktionalität beitragen. Eine solche Viergelenk-Kinematik (bzw. eine entsprechende Kinematik mit variabler Anbindung des Oberteils 46 entsprechend Figur 4a) kann erfindungsgemäß sowohl parallel zur Fahrtrichtung als auch quer dazu oder auch diagonal angeordnet sein.

In den Figuren 4b (inaktive Position) und 4c (aktive Position) ist in perspektivischer Ansicht eine weitere Variante der Rückhaltevorrichtung 20 mit dem sich bei dieser Variante im wesentlichen in lediglich angedeuteten Linearführungen linear beweglichen Oberteil 46 dargestellt, welches während seiner linearen oder zumindest im wesentlichen linearen Bewegung das Aufstellelement 24 aufstellt. Hierbei wird das Oberteil 46 von dem beispielsweise als Spiralfeder vorgesehenen Aktuierungsmittel 23 angetrieben oder es ist eine andere Form des Aktuierungsmittels 23 vorgesehen, beispielsweise ein pyrotechnisch arbeitender Linearaktuator.

Das Aktuierungsmittel 23 kann erfindungsgemäß bevorzugt als eine pyrotechnische Einheit bzw. als ein pyrotechnischer Aktuator, bevorzugt ein Linearaktuator, ausgebildet sein. Erfindungsgemäß ist es jedoch alternativ oder kumulativ auch möglich, dass das Aktuierungsmittel 23 als ein federvorgespanntes Element ausgebildet ist (mit mechanisch gespeicherter Aktuierungsenergie) oder als eine elektromagnetische Einheit ausgebildet ist. Hierbei ist es erfindungsgemäß besonders vorteilhaft vorgesehen, dass die Wirkrichtung des Aktuierungsmittels 23 trotz der in Bezug auf den Benutzer des Fahrzeugsitzes 10 relativ nahen Anordnung des Aktuierungsmittels 23 zu keiner Zeit auf den Benutzer bzw. auf sensible Körperteile des Benutzers (wie etwa der Rumpf bzw. der Beckenbereich) gerichtet ist. Hierdurch kann das Verletzungsrisiko, beispielsweise im Falle eines Materialdefekts erheblich reduziert werden. Die Wirkrichtung des Aktuierungsmittels 23 kann erfindungsgemäß entweder im wesentlichen parallel zur Fahrzeugrichtung vorgesehen sein oder aber quer dazu eingestellt sein oder auch diagonal eingestellt sein.

Am Aufstellelement 24, insbesondere an dessen oberen Ende, kann erfindungsgemäß ein nicht dargestelltes Verriegelungsmittel befestigt sein. Bevorzugt ist ein solches Verriegelungsmittel erfindungsgemäß zur Gewährleistung einer guten Schutzfunktion der Rückhaltevorrichtung 20 vorgesehen, so dass das System bei einer Aktuierung des Aktuierungsmittels 23 sofort gegen eine Bewegung zurück in die inaktive Position 21 mittels des Verriegelungsmittels verriegelt wird. Hierdurch wird eine maximal mögliche Schutzwirkung in allen denkbaren Situationen erreicht, auch dann, wenn die eigentliche vollständig ausgestellte Endposition der Rückhaltevorrichtung 20 nicht erreicht wird.

Gemäß der vorliegenden Erfindung ist die Rückhaltevorrichtung 20-Zwischen dem Polsterträger 34 und der Polsterung 33 sowie beabstandet zu den Sitzseitenteilen 31 angeordnet und die Rückhaltevorrichtung 20 ist ausschließlich an dem Polsterträger 33 befestigt. Hierdurch ist es vorteilhaft möglich, dass die Rückhaltevorrichtung 20 besonders schnell und einfach an dem Polsterträger 34 montiert werden kann.

In den Figuren 9a, 9b, 9c, 9d, 9e und 9f sind in perspektivischer Ansicht zwei weitere Varianten der Rückhaltevorrichtung 20 in der aktiven Position (Figuren 9b, 9c, 9e und 9f) bzw. der inaktiven Position (Figuren 9a und 9d) dargestellt. Hierbei ist eine Kulisse 80 in einem seitlich angeordneten Verriegelungshebel 84 angeordnet. Die Kulisse 80 weist einen Anfangsbereich 81 und einen Endbereich 82 auf. Ein mit dem Aufstellelement 24 bewegbarer Bolzen 85 greift in die Kulisse 80 ein und wird bei einer Bewegung in die aktive Position der Rückhaltevorrichtung 20 entlang der Kulisse 80 vom Anfangsbereich 81 in Richtung zum Endbereich 82 bewegt. Die Form der Kulisse 80 ist nun derart gestaltet, dass zumindest in der (vollständig) aktivierten Position bzw. aktiven Position 22 der Rückhaltevorrichtung 20 eine Bewegung des Aufstellelementes 24 bzw. des Bolzens 85 zurück verhindert wird. Der Unterschied zwischen der in den Figuren 9a, 9b und 9c gezeigten Ausführungsvariante und der in den Figuren 9d, 9e und 9f gezeigten Ausführungsvariante liegt im wesentlichen in der Form der Kulisse 80 begründet, wobei die Ausführungsvariante gemäß den Figuren 9a, 9b und 9c eine mehr geknickte Form der Kulisse 80 aufweist, während dem die Ausführungsvariante gemäß den Figuren 9d, 9e und 9f eine mehr gekrümmte Form der Kulisse 80 aufweist. Der Verriegelungshebel 84 kann hierbei in Richtung auf seine der inaktiven Position entsprechende Stellung vorgespannt oder federvorbelastet sein.

Gemäß einer in den Figuren 9g (inaktive Position) und 9h (aktive Position) dargestellten weiteren Ausführungsvariante des Verriegelungsmittels 25 ist anstelle der Kulisse 80 (gemäß der zuvor beschriebenen Ausführungsvariante) eine Steuerkurve 80' mit ebenfalls einem Anfangsbereich und einem Endbereich 82' für den Bolzen 85 vorgesehen, wobei die Steuerkurve im Endbereich eine Ausnehmung derart aufweist, dass ebenfalls der mit dem Aufstellelement 24 bewegte Bolzen 85 aufgrund der in einer Unfallsituation vorliegenden Kraftverhältnisse sich nicht mehr zurück in den Anfangsbereich bewegen kann bzw. eine solche Zurückbewegung sehr unwahrscheinlich ist. Der Verriegelungshebel 84 kann hierbei ebenfalls in Richtung auf seine der inaktiven Position entsprechende Stellung vorgespannt oder federvorbelastet sein.

Gemäß einer in den Figuren 9i (inaktive Position) und 9j (aktive Position) dargestellten weiteren Ausführungsvariante des Verriegelungsmittels 25 ist die Kulisse 80 mit einem eine verringerte lichte Öffnung aufweisenden Anfangsbereich 81 und einem eine vergrößerte lichte Öffnung aufweisenden Endbereich 82 derart ausgeformt, dass der Bolzen 85 in einem ersten axialen Bereich 85' einen kleineren Durchmesser aufweist und mit dem Anfangsbereich 81 zusammenwirkt und das der Bolzen 85 beim Erreichen des Endbereichs 82 der Kulisse 80 (was bei einer Bewegung des Aufstellelements 24 in Richtung auf die aktive Position 22 zu erfolgt) aufgrund einer axialen Federvorspannung des Bolzens aufgrund eines Federmittels 86 mit einem zweiten axialen und einen größeren Durchmesser aufweisenden Bereich 85" des Bolzens in den Endbereich 82 gedrückt wird.

Gemäß einer in den Figuren 9k (aktive Position) und 9l (inaktive Position) dargestellten weiteren Ausführungsvariante des Verriegelungsmittels 25 ist es vorgesehen, dass das Aufstellelement 24 mit dem Oberteil 46, insbesondere mit Löchern oder Ausnehmungen 46' im Oberteil 46, derart zusammenwirkt, dass beim Erreichen der aktiven Position 22 eine Zurückbewegung des Aufstellelements 24 verhindert wird. Hierbei ist es insbesondere vorgesehen, dass das Aufstellelement 24 Verriegelungsnasen 24'" zum Einrasten in die Ausnehmungen 46' des Oberteils aufweist. Ferner kann es zusätzlich vorgesehen sein, dass das Oberteil 46 einen Anschlag zur Begrenzung der Aufstellbewegung des Aufstellelements 24 aufweist, beispielsweise einen umgestellten Flansch.

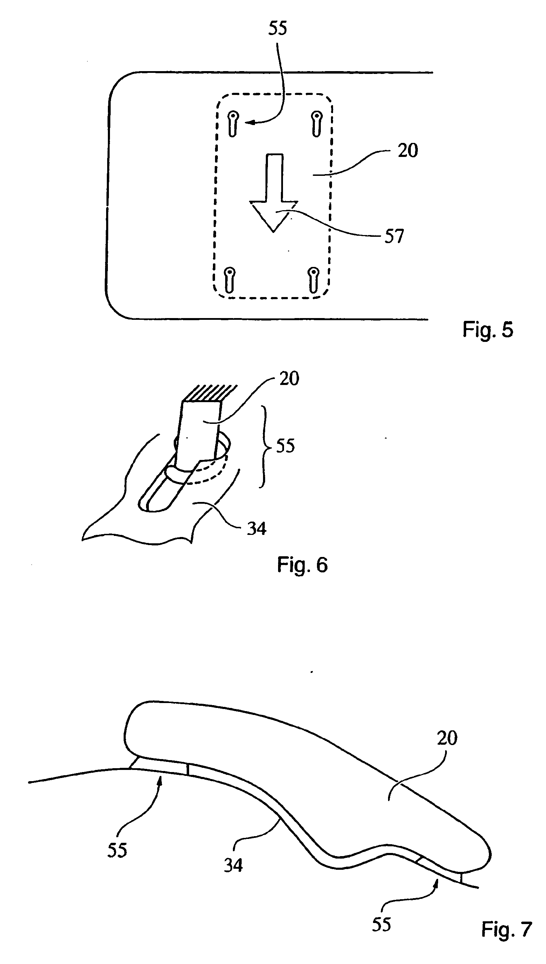

In den Figuren 5 und 7 ist jeweils-schematisch in Draufsicht bzw. in Seitenansicht eine Ausführungsform einer Befestigung der erfindungsgemäßen Rückhaltevorrichtung 20 am Polsterträger 34 dargestellt. In Figur 6 ist ein Ausschnitt der Verbindung der erfindungsgemäßen Rückhaltevorrichtung 20 mit dem Polsterträger 34 dargestellt.

In der Ausführungsform der Verbindung der Rückhaltevorrichtung 20 gemäß der Figuren 5 und 6 ist die Rückhaltevorrichtung 20 durch eine Verschiebung relativ zum Polsterträger 34 mit diesem befestigt. Hierzu ist ein Befestigungselement 55 aus beispielsweise einem schlüssellochförmigen Langloch und einem Führungszapfen vorgesehen, wobei der Führungszapfen in das Langloch eingeführt wird und anschließend um eine gewisse Strecke entsprechend dem Pfeil 57 verschoben wird, um die zu verbindenden Elemente miteinander zu befestigen. In dem in Figur 5 und 6 dargestellten Fall ist beispielsweise die Unterseite des Unterteils 45 der Rückhaltevorrichtung 20 mit einer Anzahl von Zapfen versehen, die in entsprechende Ausnehmungen (Langlöcher) im Polsterträger 34 eingesetzt werden und nach einer Verschiebung gemäß dem Pfeil 57 eine Verbindung zwischen dem Polsterträger 34 und der Rückhaltevorrichtung 20 erzeugen. Alternativ kann es auch vorgesehen sein, dass die Zapfen am Polsterträger 34 und die Langlöcher an der Rückhaltevorrichtung 20 ausgebildet sind. Ferner kann es alternativ auch vorgesehen sein, dass eine Clipverbindung zur Befestigung Verwendung findet.

In Figur 7 ist in einer Seitendarstellung eines Ausschnitts des Polsterträgers 34 die Verbindung desselben mit der Rückhaltevorrichtung 20 für den Fall einer Klebeverbindung schematisch dargestellt. Hierbei wird ein Klebstoff (in der Figur 7 zwischen dem Polsterträger 34 und der Rückhaltevorrichtung 20 mit dem Bezugszeichen 55 lediglich angedeutet) entweder auf den Polsterträger 34 oder auf die Rückhaltevorrichtung 20 (oder auch auf beide) aufgebracht und anschließend beide zueinander positioniert. Hierbei kann es sich bei der Klebeverbindung auch um ein beispielswiese im wesentlichen in X-Richtung verlaufende Klebeverbindung handeln (nicht dargestellt).

Alternativ kann es erfindungsgemäß auch vorgesehen sein, dass verschiedene Verbindungstechniken miteinander kombiniert werden, beispielsweise die Ausführungsvarianten gemäß der Figur 5 bzw. 6 und gemäß der Figur 7. Hierdurch ist es möglich, eine besonders gute und sichere Verbindung zwischen dem Polsterträger 34 und der Rückhaltevorrichtung 20 herbeizuführen.

Als weitere nicht beanspruchte Verbindungstechniken kommen noch eine Schweißung, insbesondere eine Laserschweißung, in Frage. Weiterhin kommt auch eine sogenannte CMT-Schweißung (cold metal transfer) oder auch eine Verschraubung in Frage.

In Figur 8 ist schematisch in Seitenansicht ein Ausschnitt der erfindungsgemäßen Rückhaltevorrichtung 20 mit einem um eine zur Sitzfläche im wesentlichen senkrecht stehende Drehachse zumindest teilweise drehbaren Aufstellelement 24 dargestellt. Bei den spiralförmig gegeneinander drehbaren becherartigen Zylinderelementen kann im zentralen Bereich ein Deformationselement und/oder ein Stoßdämpfer und/oder ein Federelement (beispielsweise als Spiralfeder) vorgesehen sein. Bei der in Figur 8 schematisch dargestellten Ausführungsform des Verriegelungsmittels 25 ist eine asymmetrische Verzahnung 41 zwischen den zwei teleskopartig ineinandergreifenden Zylinderelementen vorgesehen, die gemeinsam das Aufstellelement 24 bilden. Hierbei ist die asymmetrische Verzahnung 41 derart vorgesehen, dass eine Ausstellbewegung der Zylinderelemente möglich ist, jedoch keine Rückbewegung. Gemäß einer nicht dargestellten Variante dieser Ausführungsform des Verriegelungsmittels 25 ist es vorgesehen, dass eine spiralförmig im Bereich des Umfangs der Zylinderelemente angeordnete Zapfenkulissenführung bzw. Zapfenführungsbahn in ihrem der aktiven Position (ausgestellte Zylinderelemente) entsprechenden Endbereich eine verringerte Steigung aufweist, die im Falle einer Auslösung der Rückhaltevorrichtung 20 zur Verhinderung der Einstellung in die inaktive Position der Rückhaltevorrichtung führt.

### Bezugszeichenliste

- 10: Fahrzeugsitzes
- 15: Sitzunterbaus
- 16: Bodenbaugruppe
- 20: Rückhaltevorrichtung
- 21: inaktive Position
- 21': eingezogene Position
- 22: aktive Position
- 22': ausgestellte Position
- 23: Aktuierungsmittel
- 24: Aufstellelement
- 25: Verriegelungsmittel
- 30: Sitzteil
- 31: Sitzseitenteile
- 32: Sitzfläche
- 33: Polsterung/Sitzkissen
- 34: Sitzschale/Polsterträger/Sitzwanne
- 45: Unterschale
- 46: Oberschale
- 55: Befestigungselement
- 57: Verschiebungspfeil
- 80: Kulisse
- 80': Steuerkurve
- 81: Anfangsbereich
- 82: Endbereich der Kulisse
- 82': Endbereich der Steuerkurve
- 84: Verriegelungshebel
- 85: Bolzen
- 85': erster axialer Bereich des Bolzens (durchmesserverkleinert)
- 85": zweiter axialer Bereich des Bolzens (durchmesservergrößert)

## Patentansprüche

1. Fahrzeugsitz (10) mit einem Sitzteil (30) und mit einer Rückhaltevorrichtung (20) zur Verhinderung des Durchrutschens eines Passagiers auf dem Fahrzeugsitz (10) bei einer Unfallverzögerung, wobei die Rückhaltevorrichtung (20) in eine eingefahrene inaktive Position (21) einstellbar ist und wobei die Rückhaltevorrichtung (20) in eine ausgefahrene aktive Position (22) einstellbar ist, wobei das Sitzteil (30) in Fahrzeuglängsrichtung beidseitig Sitzseitenteile (31) aufweist, wobei das Sitzteil (30) eine eine Sitzfläche (32) definierende Polsterung (33) und einen unterhalb der Polsterung (33) vorgesehenen Polsterträger (34) aufweist, **dadurch gekennzeichnet, dass** die Rückhaltevorrichtung (20) zwischen dem Polsterträger (34) und der Polsterung (33) sowie beabstandet zu den Sitzseitenteilen (31) angeordnet und befestigt ist, wobei die Rückhaltevorrichtung (20) ausschließlich an dem Polsterträger (34) durch Aufstecken und/oder Aufschieben und/oder Verclipsen und/oder Verkleben befestigbar ist, wobei die Rückhaltevorrichtung (20) als ein Add-on-Element ausgebildet ist, das wahlweise in den Fahrzeugsitz (10) integrierbar ist.

2. Fahrzeugsitz (10) nach Anspruch 1, **dadurch gekennzeichnet, dass** die Rückhaltevorrichtung (20) ein Aktuierungsmittel (23), insbesondere einen pyrotechnischen Linearaktuator, aufweist, wobei das Aktuierungsmittel (23) zwischen dem Polsterträger (34) und der Polsterung (33) angeordnet ist oder zwischen dem Polsterträger (34) und der Polsterung (33) abgestützt ist.

3. Fahrzeugsitz (10) nach einem der vorhergehenden Ansprüche, **dadurch gekennzeichnet, dass** die Rückhaltevorrichtung (20) ein von dem Aktuierungsmittel (23) bewegbares Aufstellelement (24) aufweist, wobei das Aufstellelement (24) mittels des Aktuierungsmittels (23) von einer der inaktiven Position (21) der Rückhaltevorrichtung (20) entsprechenden eingezogenen Position (21') aus in eine der aktiven Position (22) der Rückhaltevorrichtung (20) entsprechenden ausgestellten Position (22') einstellbar ist.

4. Fahrzeugsitz (10) nach einem der vorhergehenden Ansprüche, **dadurch gekennzeichnet, dass** zwischen der eingezogenen Position (21') und der ausgestellten Position (22') des Aufstellelements (24) eine Drehung um eine im wesentlichen waagrecht verlaufende Achse vorgesehen ist, wobei das Aufstellelement (24) bevorzugt als plattenförmiges Aufstellelement (24) vorgesehen ist.

5. Fahrzeugsitz (10) nach Anspruch 3, **dadurch gekennzeichnet, dass** die Drehung um die im wesentlichen waagrecht verlaufende Achse als eine Drehung in Fahrtrichtung vorgesehen ist.

6. Fahrzeugsitz (10) nach einem der vorhergehenden Ansprüche, **dadurch gekennzeichnet, dass** zwischen der eingezogenen Position (21') und der ausgestellten Position (22') des Aufstellelements (24) eine Drehung zumindest eines Teils des Aufstellelements (24) um eine im wesentlichen senkrecht verlaufende Achse vorgesehen ist, wobei das Aufstellelement (24) bevorzugt als teleskopartig ausfahrbares Aufstellelement (24) vorgesehen ist.

7. Fahrzeugsitz (10) nach einem der vorhergehenden Ansprüche, **dadurch gekennzeichnet, dass** die Rückhaltevorrichtung (20) ein Unterteil (45) und ein Oberteil (46) aufweist, wobei das Unterteil (45) Befestigungselemente (55) zur Verbindung der Rückhaltevorrichtung (20) mit dem Polsterträger (34) aufweist.

8. Fahrzeugsitz (10) nach einem der vorhergehenden Ansprüche, **dadurch gekennzeichnet, dass** der Polsterträger (34) Befestigungselemente (55) zur Verbindung der Rückhaltevorrichtung (20) mit dem Polsterträger (34) aufweist.

9. Fahrzeugsitz (10) nach einem der vorhergehenden Ansprüche, **dadurch gekennzeichnet, dass** die Rückhaltevorrichtung (20) ein Verriegelungsmittel (25) aufweist, wobei das Verriegelungsmittel (25) bevorzugt durch die Bewegung des Aufstellelements (24) bewegbar vorgesehen ist.

10. Rückhaltevorrichtung (20) für einen Fahrzeugsitz (10) gemäß einem der vorhergehenden Ansprüche.

11. Verfahren zur Herstellung eines Fahrzeugsitzes (10) gemäß einem der Ansprüche 1 bis 9, **dadurch gekennzeichnet, dass** in einem ersten Schritt die tragende Struktur des Fahrzeugsitzes (10) hergestellt wird und dass in einem zweiten Schritt die Rückhaltevorrichtung (20) mit dem Polsterträger (34) verbunden wird, wobei die Rückhaltevorrichtung (20) zwischen dem Polsterträger (34) und der Polsterung (33) sowie beabstandet zu den Sitzseitenteilen (31) angeordnet und befestigt wird und die Rückhaltevorrichtung (20) ausschließlich an dem Polsterträger (34) durch Aufstecken und/oder Aufschieben und/oder Verclipsen und/oder Verkleben und/oder Verschrauben und/oder Vernieten befestigt wird, wobei die Rückhaltevorrichtung (20) als ein Add-on-Element ausgebildet ist, das wahlweise in den Fahrzeugsitz (10) integrierbar ist.

## Claims

1. Vehicle seat (10) with a seat section (30) and with a restraint device (20) for preventing submarining of a passenger on the vehicle seat (10) in the case of an accident-induced deceleration, wherein the restraint device (20) can be set in a retracted inactive position (21), and wherein the restraint device (20) can be set in an extended active position (22), wherein the seat section (30) on both sides has seat side sections (31) in the longitudinal direction of the vehicle, wherein the seat section (30) has a padding (33) which defines a seat surface (32), and a padding support (34) which is provided beneath the padding (33), **characterized in that** the restraint device (20) is arranged and fastened between the padding support (34) and the padding (33) and also at a distance from the seat side sections (31), wherein the restraint device (20) is fastened exclusively to the padding support (34) by pushing on and/or by sliding on and/or by clipping and/or by adhesive fastening, wherein the restraint device (20) is designed as an add-on element which can be selectively integrated into the vehicle seat (10).

2. Vehicle seat (10) according to Claim 1, **characterized in that** the restraint device (20) has an actuating means (23), especially a pyrotechnic linear actuator, wherein the actuating means (23) is arranged between the padding support (34) and the padding (33), or is supported between the padding support (34) and the padding (33).

3. Vehicle seat (10) according to one of the preceding claims, **characterized in that** the restraint device (20) has a positioning element (24) which is movable by the actuating means (23), wherein the positioning element (24) can be adjusted by means of the actuating means (23) from a retracted position (21') which corresponds to the inactive position (21) of the restraint device (20) into an extended position (22') which corresponds to the active position (22) of the restraint device (20).

4. Vehicle seat (10) according to one of the preceding claims, **characterized in that** a rotation around an essentially horizontally extending axis is provided between the retracted position (21') and the extended position (22') of the positioning element (24), wherein the positioning element (24) is preferably provided as a plate-form positioning element (24).

5. Vehicle seat (10) according to Claim 3, **characterized in that** the rotation around the essentially horizontally extending axis is provided as a rotation in the direction of travel.

6. Vehicle seat (10) according to one of the preceding claims, **characterized in that** a rotation of at least one part of the positioning element (24) around an essentially vertically extending axis is provided between the retracted position (21') and the extended position (22') of the positioning element (24), wherein the positioning element (24) is preferably provided as a telescopically extendable positioning element (24).

7. Vehicle seat (10) according to one of the preceding claims, **characterized in that** the restraint device (20) has a lower section (45) and an upper section (46), wherein the lower section (45) has fastening elements (55) for connecting the restraint device (20) to the padding support (34).

8. Vehicle seat (10) according to one of the preceding claims, **characterized in that** the padding support (34) has fastening elements (55) for connecting the restraint device (20) to the padding support (34).

9. Vehicle seat (10) according to one of the preceding claims, **characterized in that** the restraint device (20) has a locking means (25), wherein the locking means (25) is preferably provided in a movable manner by means of the movement of the positioning element (24).

10. Restraint device (20) for a vehicle seat (10) according to one of the preceding claims.

11. Method for producing a vehicle seat (10) according to one of Claims 1 to 9, **characterized in that** in a first step the supporting structure of the vehicle seat (10) is produced, and **in that** in a second step the restraint device (20) is connected to the padding support (34), wherein the restraint device (20) is arranged and fastened between the padding support (34) and the padding (33) and also at a distance from the seat side sections (31) and the restraint device (20) is fastened exclusively to the padding support (34) by pushing on and/or by sliding on and/or by clipping and/or by adhesive fastening and/or by screwing and/or by riveting, wherein the restraint device (20) is designed as an add-on element which can be selectively integrated into the vehicle seat (10).

## Revendications

1. Siège de véhicule (10) comprenant une partie de siège (30) et un dispositif de retenue (20) pour empêcher le glissement d'un passager sur le siège de véhicule (10) dans le cas d'une décélération due à un accident, le dispositif de retenue (20) pouvant être ajusté dans une position inactive rentrée (21), et le dispositif de retenue (20) pouvant être ajusté dans une position active sortie (22), la partie de siège (30) présentant dans la direction longitudinale du véhicule, des deux côtés, des parties latérales de siège (31), la partie de siège (30) présentant un rembourrage (33) définissant une surface d'assise (32) et un support de rembourrage (34) prévu sous le rembourrage (33), **caractérisé en ce que** le dispositif de retenue (20) est disposé et fixé entre le support de rembourrage (34) et le rembourrage (33) et à distance des parties latérales de siège (31), le dispositif de retenue (20) pouvant être fixé exclusivement sur le support de rembourrage (34) par enfichage et/ou poussée et/ou enclipsage et/ou collage, le dispositif de retenue (20) étant réalisé sous forme d'élément rapporté, qui peut être intégré au choix dans le siège de véhicule (10).

2. Siège de véhicule (10) selon la revendication 1, **caractérisé en ce que** le dispositif de retenue (20) présente un moyen d'actionnement (23), en particulier un actionneur linéaire pyrotechnique, le moyen d'actionnement (23) étant disposé entre le support de rembourrage (34) et le rembourrage (33) ou étant supporté entre le support de rembourrage (34) et le rembourrage (33).

3. Siège de véhicule (10) selon l'une quelconque des revendications précédentes, **caractérisé en ce que** le dispositif de retenue (20) présente un élément de montage (24) pouvant être déplacé par le moyen d'actionnement (23), l'élément de montage (24) pouvant être ajusté grâce au moyen d'actionnement (23) d'une position rentrée (21') correspondant à la position inactive (21) du dispositif de retenue (20) dans une position sortie (22') correspondant à la position active (22) du dispositif de retenue (20).

4. Siège de véhicule (10) selon l'une quelconque des revendications précédentes, **caractérisé en ce qu'**entre la position rentrée (21') et la position sortie (22') de l'élément de montage (24) est prévue une rotation autour d'un axe s'étendant essentiellement horizontalement, l'élément de montage (24) étant prévu de préférence sous forme d'élément de montage (24) en forme de plaque.

5. Siège de véhicule (10) selon la revendication 3, **caractérisé en ce que** la rotation autour de l'axe s'étendant essentiellement horizontalement est prévue sous forme de rotation dans la direction de conduite.

6. Siège de véhicule (10) selon l'une quelconque des revendications précédentes, **caractérisé en ce qu'**entre la position rentrée (21') et la position sortie (22') de l'élément de montage (24), est prévue une rotation d'au moins une partie de l'élément de montage (24) autour d'un axe s'étendant essentiellement verticalement, l'élément de montage (24) étant prévu de préférence sous forme d'élément de montage (24) pouvant sortir de manière télescopique.

7. Siège de véhicule (10) selon l'une quelconque des revendications précédentes, **caractérisé en ce que** le dispositif de retenue (20) présente une partie inférieure (45) et une partie supérieure (46), la partie inférieure (45) présentant des éléments de fixation (55) pour la connexion du dispositif de retenue (20) au support de rembourrage (34).

8. Siège de véhicule (10) selon l'une quelconque des revendications précédentes, **caractérisé en ce que** le support de rembourrage (34) présente des éléments de fixation (55) pour la connexion du dispositif de retenue (20) au support de rembourrage (34).

9. Siège de véhicule (10) selon l'une quelconque des revendications précédentes, **caractérisé en ce que** le dispositif de retenue (20) présente un moyen de verrouillage (25), le moyen de verrouillage (25) étant prévu déplaçable de préférence par le mouvement de l'élément de montage (24).

10. Dispositif de retenue (20) pour un siège de véhicule (10) selon l'une quelconque des revendications précédentes.

11. Procédé de fabrication d'un siège de véhicule (10) selon l'une quelconque des revendications 1 à 9, **caractérisé en ce que** dans une première étape, la structure portante du siège de véhicule (10) est fabriquée, et **en ce que** dans une deuxième étape, le dispositif de retenue (20) est connecté au support de rembourrage (34), le dispositif de retenue (20) étant disposé et fixé entre le support de rembourrage (34) et le rembourrage (33) et à distance des parties latérales de siège (31) et le dispositif de retenue (20) étant fixé exclusivement sur le support de rembourrage (34) par enfichage et/ou poussée et/ou enclipsage et/ou collage et/ou vissage et/ou rivetage, le dispositif de retenue (20) étant réalisé sous forme d'élément rapporté, qui peut être intégré au choix dans le siège de véhicule (10).
